Europäisches Patentamt

**European Patent Office**

**Office européen des brevets**

(11) Publication number: **0 232 579**
A1

# (12) EUROPEAN PATENT APPLICATION

(21) Application number: **86306292.3**

(51) Int. Cl.⁴: **G 06 K 19/08**, G 06 K 1/12

(22) Date of filing: **14.08.86**

(30) Priority: **28.08.85 GB 8521364**

(43) Date of publication of application: **19.08.87**
**Bulletin 87/34**

(84) Designated Contracting States: **AT CH DE FR GB IT LI NL
SE**

(71) Applicant: **THE DE LA RUE COMPANY PLC, De La Rue
House 3/5 Burlington Gardens, GB-London W1A 1DL
(GB)**

(72) Inventor: **Kay, Ralph, 15 Juniper Drive Ray Park Road,
Maidenhead Berkshire (GB)**
Inventor: **Gomme, Martin Christopher, 9 Terrace
Gardens, Watford Hertfordshire (GB)**

(74) Representative: **Skone James, Robert Edmund, GILL
JENNINGS & EVERY 53-64 Chancery Lane, London
WC2A 1HN (GB)**

(54) **Manufacturing security cards.**

(57)    A method of manufacturing a security card blank (7) is
described. The method comprises
a) assembling together a plurality of layers (1, 5), an internal
layer (5) comprising a radiation absorbent metallic layer; and
b) securing the layers (1–5) together such that the metallic
layer (5) is secured by a controlled amount to the adjacent layers (1, 4) to allow the metallic layer to be imaged by a high in-
tensity radiation beam.
    A security card (9) may be manufactured from the blank
(7) by
c) exposing the metallic layer (5) in the security card blank to
radiation whereby the metallic layer is modified to produce an
image (8) in the metallic layer, the arrangement being such that
in the finished card at least part of the imaged metallic layer is
detectable from outside the card.

THE DE LA RUE COMPANY PLC                    52/2398/02

MANUFACTURING SECURITY CARDS

The invention relates to methods for manufacturing security cards and security card blanks. In this specification, security cards are taken to include all types of card which are used to identify or authorise the bearer. One group of such security cards includes bank cards such as credit cards, cash cards, debit cards, identification cards, and cheque guarantee cards. Other security cards are used to enable the bearer of the card to gain access to a building, service, or country and the like and for example to use vending machines.

A requirement of security cards is that they are substantially tamper proof and resistant to counterfeit copying methods. Many attempts have been made to prevent counterfeiting including the printing of complex patterns on the card which are difficult to reproduce. The problem with these methods are firstly that the time for manufacturing the card significantly increases with the complexity of the anti-forging patterns and secondly more sophisticated equipment is now becoming generally available making these anti-counterfeiting systems less effective.

It is difficult and expensive to provide high quality images and graphics in cards and in most cases difficult and expensive methods and assemblies are involved. For example, the addition of photographs and the like followed by separate cover lamination is frequently involved. The quality of images, portraits and fine individual features produced securely within cards is often limited and they have to be individually produced by tedious input and control methods.

DE-A-3030260 describes an identification card having a metal deposition on a bottom layer. The metal layer is relatively thick to allow electrical conduction so that it can be encoded by making use of its electrosensitive property. This results in evaporation of parts of the layer. The metal layer is encoded and then a cover layer is secured over it. This method is time consuming and expensive and results in a relatively expensive product due to the slow and complex equipment required. It is also susceptible to counterfeiting due to the straightforward imaging method and the risk that blanks without cover layers could be available to counterfeiters. This means that for security the card manufacturer has to manufacture and encode each individual card.

In accordance with one aspect of the present invention, a method of manufacturing a security card blank comprises:

    a) assembling together a plurality of layers, an internal layer comprising a metallic layer as hereinafter defined; and

    b) securing the layers together such that the metallic layer is secured by a controlled amount to the adjacent layers to allow the metallic layer to be imaged by a high intensity radiation beam.

We have found that the use of a metallic layer enables personalised information to be quickly and easily included into a security card through one or more cover layers. This not only allows personalised security cards to be produced by the card manufacturer but also allows card blanks to be sold to card issuing institutions for subsequent personalisation without significant security risk. This will be explained in more detail below.

The invention is particularly applicable to the bulk production of security card blanks. Thus, in accordance with a second aspect of the present invention, a method of manufacturing a plurality of security card blanks comprises

a) assembling together a plurality of layers, an internal layer comprising a metallic layer as hereinafter defined; and

b) securing the layers together to produce a composite blank, wherein the metallic layer is secured by a controlled amount to the adjacent layers to allow the metallic layer to be imaged by a high intensity radiation beam and dividing the composite blank into individual security card blanks.

In this context, "metallic" is herein defined as including radiation absorbent metals, metalloids, and their alloys or derivatives, such as oxides or sulphides.

Preferred metallic layers include nichrome of various compositions, chromium, stainless steel, and related metals having a melting point in the range 1500-2000°C. The choice of metal is generally governed by the wavelength of the imaging radiation. These metals are particularly advantageous because they provide durable images not readily produced by lower intensity sources, thus increasing security.

A further significant advantage is that the metallic layer may be very thin which enables the card blank layers to be more securely bonded together and increases imaging accuracy. For example, layers having thicknesses up to 100nm, preferably in the order of 5-30nm, most preferably 15nm are suitable. We have discovered that certain metallic thin films surprisingly exhibit a relatively high degree of radiation absorbence. For example, chromium will absorb about 40% of incident laser light. In all cases, the electrical conductivity of the preimaged metallic layer is very low.

The use of thin metallic layers is useful during manufacture of the card since these layers can be coated onto a substrate using a known technique such as vacuum evaporation, sputtering by RF, electron beam techniques and the like.

The metallic layer may be coated directly onto one of the other layers or alternatively provided on an additional substrate member which is positioned in a recess in one of the layers with the outer surface of the metallic layer flush with the adjacent surface of the layer.

Preferably, the metallic layer used in methods according to the second aspect of the invention comprises a number of substantially parallel metallic strips. Each metallic strip will be divided into a number of portions, one for each blank.

Typically, one or more of the non-metallic layers will carry preprinted information such as security printing and the like.

Conveniently, the degree of securement in step (b) is sufficient to enable the card blank to be handled. This is particularly useful where the card blank manufacturer sells the blanks for subsequent imaging although it is also useful to enable each blank or a composite blank to be handled within a full security card manufacturing environment.

The layers may be secured together in step b) using any appropriate conventional technique such as RF bonding or a selective thermal or adhesive method.

In general it is difficult and often undesirable to bond the metallic layer fully with the adjacent layers. Preferably, therefore, at least part of the periphery of the metallic layer is spaced inwardly from the edge of the card blank to define one or more securement regions, the layers sandwiching the metallic layer being secured together in step (b) at the securement regions. Securement regions may be positioned around the entire periphery of the metallic layer or, particularly in the case where a composite blank having a metallic strip is concerned, along opposite sides of the metallic layer.

In this situation the metallic layer is not fully secured to the adjacent layers and thus is relatively easily imagable by the imaging radiation since the degree of modification of the metallic layer is related to the extent to which the metallic layer is secured to the adjacent layers. In this situation, the metallic layer can be imaged using a dispersion technique in which the metallic layer is selectively melted and redistributed to give regions of much lower optical density and large optical contrast.

In other examples, the area of the metallic layer to be imaged may be partially secured to the adjacent layers. In these cases, during the imaging step, portions of the metallic layer will melt and recrystallise with varying degrees of lateral movement of the metallic particles taking place depending on the strength of the securement. This will result in an image which is not readily visible to the naked eye but is visible using high resolution microscopy. This in itself leads to additional security of the card.

Although the metallic layer must be secured to the adjacent layers by a controlled amount in step b), other layers which are not adjacent the metallic layer could have been previously consolidated, as for example core layers.

In accordance with a third aspect of the present invention, a method of manufacturing a security card from a card blank manufactured according to the first or second aspect of the invention comprises

     c)   exposing the metallic layer in the security card blank to radiation whereby the metallic layer is modified to produce an image in the metallic layer, the arrangement being such that in the finished card at least part of the imaged metallic layer is detectable from outside the card.

This method may be carried out by the card blank manufacturer or, particularly preferably, a separate card manufacturer to whom card blanks have been sold. In this latter case, card blanks may be manufactured in accordance with the first aspect of the invention in composite form for division into individual security cards after imaging. This reduces the risk of counterfeiting for several reasons including removal of the need for the card institution to pass personal details such as signatures and the like to the blank manufacturer.

In accordance with a fourth aspect of the present invention, a method of manufacturing a plurality of security cards comprises

a) assembling together a plurality of layers, an internal layer comprising a metallic layer as hereinbefore defined;

b) securing the layers together to produce a composite blank, wherein the metallic layer is secured by a controlled amount to the adjacent layers to allow the metallic layer to be imaged by a high intensity radiation beam;

c) exposing the metallic layer to radiation whereby the metallic layer is modified to produce images in the metallic layer, the arrangement being such that in the finished cards at least part of the imaged metallic layer is detectable from outside the cards, the metallic layer carrying different images at spaced positions throughout the metallic layer; and dividing the imaged, composite blank into individual security cards.

In some cases the securement of step (b) will be sufficient to produce a usable card. However in most cases it is preferable if the method further comprises a step (d) of carrying out a final securing step to secure the layers fully together.

The extent of the final securement in step d) should be such as to allow the card to be subject to normal use without the risk of disassembly and of sufficient strength to prevent successful tampering.

Preferably, the securement achieved in step (d) is such that further imaging is prevented.

This final securement step may be achieved by activating a previously inactive adhesive, spread between the metallic layer and one or both adjacent layers, using conventional thermal or RF techniques or a conventional lamination process.

Methods according to the invention in which the metal layer is imaged by exposing radiation such as a laser allow very rapid high quality reproduction of individual and personalising details internally within the card including for example the imaging of signatures, fingerprints, portraits, graphics and the like. In the case of a laser, this can be accurately focussed and controlled and images can be produced by electronic inputs from a computer containing the required information from files. Further, the small size of the laser spot enables high quality half-tone reproduction of images such as portraits. Other non-personalised, images could be produced as well or instead.

The process is dry and requires no chemicals or post additions of cover layers and the like with the information being protected by the cover layers in a fully consolidated form after final processing.

The images produced can be varied to give different effects and density and conveniently be used with other security features, for example holograms. Security print can if desired be read through images produced from the metal layer of selected opacity.

The invention allows the replacement in many cases of mechanical embossing used to personalise cards in the past since such details can be simultaneously produced by the imaging radiation and be protected within the card.

The image in the metallic layer may include one or more portions, some of which may be unique to the bearer of the card. For example, the image portions may include the name of the issuing institution, the bearer's signature, initials, photoimage and the like.

The metallic layer is preferably imageable under the influence of high intensity imaging radiation and is preferably only imageable in this way. This assists in the prevention of forgeries. The high intensity radiation typically has a power in the range 4 - 10 watts. For example, 4 - 5 watts is suitable for a 5 nm thick nichrome layer; 6 watts for a 20 nm thick stainless steel layer; and 6 - 8 watts for nichrome layers up to 40 nm thick. Preferably the radiation is optical radiation such as is generated by a relatively high power laser eg.a YAG laser. For example, a laser beam having a wavelength of about 1.06 microns, and a 25 micron spot diameter is particularly suitable. However other radiation sources would be suitable provided the radiation is sufficiently absorbed by the metallic layer and is of sufficient intensity. Higher intensity sources could also cause damage unless applied more rapidly.

There may be additional layers positioned between the outer layers.

The metal layer may be coated on any internal surface defined by the outer or additional layers providing the image is detectable from outside the card. The metal layer may also be coated on a core layer.

At least one layer should have a sufficient thickness to provide the card with rigidity. Typically this layer will constitute all or part of a core.

In one example the core comprises two subsidiary core layers sandwiched between the outer layers, one of the outer layers carrying the metallic layer.

It should be understood that additional metallic layers could also be provided. For example two metal layers could be provided on opposite sides of a core layer with the imaged information being visible from both sides of the card.

The layer on which the metallic layer is coated may comprise a base material such as thin plastic foil, coated paper, or other such carrier. A layer such as coated aluminium foil could be used. The material should be selected so as to be suitable for thin metal films to be applied. In general, glossy surfaces are preferable.

Alternative materials for the base material could be polymer films such as polycarbonate, polyester and PVC and these may be clear or pigmented.

The other layers making up the card may have a conventional constitution and are typically polymers such as PVC.

In some cases, if all the layers are transparent to detection wavelengths (eg. visually transparent), the metallic layer or layers may be visible from both sides of the card.

Preferably, the image in the metallic layer is visible to the unassisted human eye from at least one side of the card. In some arrangements, however, it may be feasible for the imaged information only to be detectable at non-visible wavelengths or by high resolution microscopy.

One or more of the layers may carry additional security features such as security printing and/or optical devices such as holograms, diffraction gratings and the like. It is particularly convenient if the layer on which the metallic layer is coated has an additional security feature provided on it prior to assembling the layers together.

Some of these features may be associated with image portions in the metallic layer which may itself contribute to the feature. For example, in the case of a reflection hologram or transparent device where back reflection is needed, part of the metallic layer may be positioned behind the layer containing the hologram or transparent device to provide a reflecting surface. That part may include an image portion such as the bearer's initials, provided the hologram or transparent device is transparent to the high power imaging radiation.

In other examples, where opaque optical security features are provided, the metallic layer may be positioned over the feature so that after imaging, all or part of the security feature is visible through the metallic layer. Again, this part of the metallic layer may include an image portion.

Other security features may be constituted by the use of additional layers which are translucent or fluorescent.

In one particularly convenient arrangement, the metallic layer is sandwiched between a pair of inorganic release layers of either the same or different composition. The inorganic release layers may be made from a material such as germanium oxide, titanium oxide, indium tin oxide, low melting glasses and the like. Other possible materials include a film forming low melting organic coating such as wax, vinyl, rubber etc.

Some examples of methods in accordance with the invention for manufacturing security card blanks and security cards will now be described with reference to the accompanying drawings, in which:-

Figures 1A-1C illustrate different stages in one example of a method of manufacturing a blank and subsequently a security card;

Figures 2A-2C illustrate different stages in a second example;

Figure 3 illustrates one stage in a third example;

Figure 4 is a cross-section through part of a finished card; and

Figures 5A and 5B illustrate a composite security card blank and card respectively.

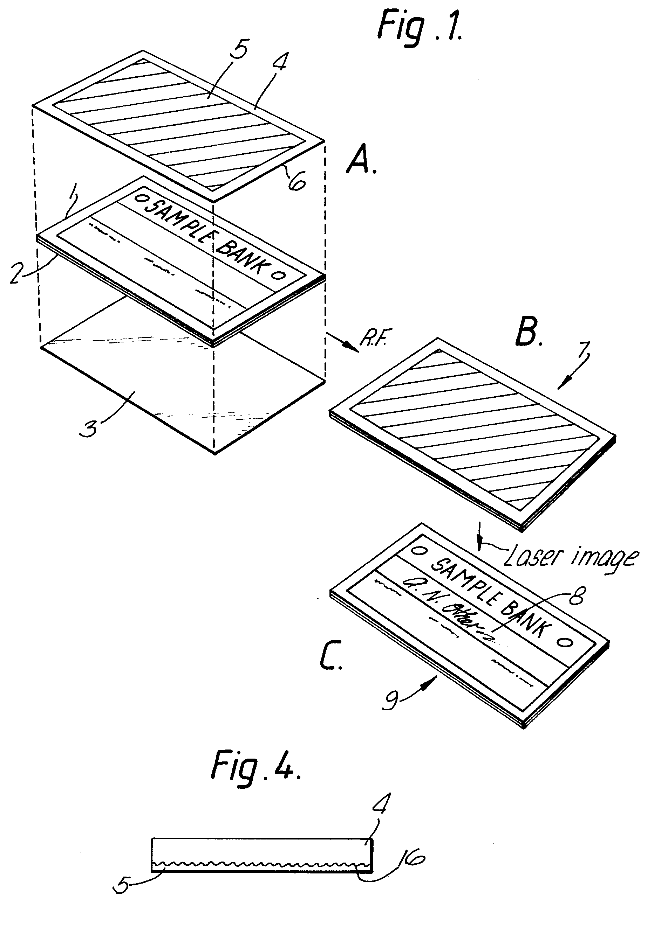

Figure 1A illustrates in exploded form the layers of the card. The card illustrated has a pair of core layers 1, 2. The outer surfaces of the core layers 1, 2 have each been printed with standard information such as the name of the issuing organisation. The core layers comprise PVC layers each having a thickness in the order of 250 microns although a single layer could be used. In general the core thickness could range between 200 and 600 micron.

The card also includes a transparent back cover sheet 3 of PVC having a thickness in the order of 75 microns and a metallised cover sheet 4 of transparent PVC having an inwardly facing surface coated with a metallic layer 5 of for example nichrome. The thickness of this metallic layer may be in the range of 5-30 nm, preferably 15 nm. The metallised cover sheet 4 has a perimeter or securement area 6 which is unmetalised.

In a first step the core layers 1, 2 and clear back cover sheet 3 are bonded together using RF welding or hot press lamination and then the cover sheet 4 is assembled with the core layer 1 with the metallic layer adjacent the core layer 1.

In a second step the securement region 6 of the cover sheet 4 is fused or bonded by RF welding or using hot melt adhesive to the core layer 1.

This results in a semi-bonded card blank 7 shown in Figure 1B. The degree of bonding is such that the card blank 7 may be positioned in laser writing apparatus but is not sufficient by itself to allow the card to be used in the normal way.

The assembly shown in Figure 1B is then exposed to a high power laser beam from a YAG laser which images the metallic layer 5 through the transparent cover layer 4. The laser beam selectively uncovers portions of the adjacent surface of the core layer 1 to reveal the printed information. In addition, the laser beam causes an image of the signature 8 of the card bearer to be inscribed in the metallic layer.

The imaging is achieved using a dispersion imaging technique (to be contrasted with conventional evaporation techniques) which is possible since the area of the metallic layer being imaged is not bonded to the core layer 1.

After the imaging step has been completed, the remaining unbonded portions of the cover layer 4 and, where appropriate, the back cover 3 are fully consolidated with the core layers 1, 2 using either the same RF bonding technique or any other suitable thermal or adhesive method. In the latter case, adhesive will have been provided on the core layers 1,2 prior to assembly with the cover sheets 3, 4.

The apparatus used to produce the image may be that described in copending European patent application No.86303433.6.

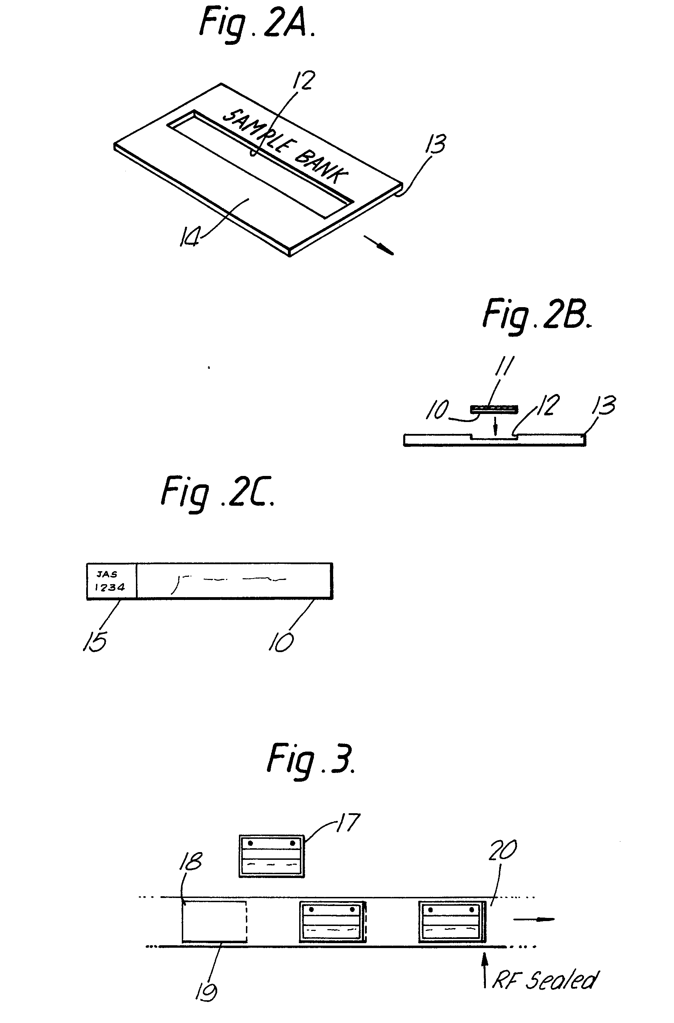

An alternative method of construction is illustrated in Figures 2A-2C and this involves the introduction of a strip of metallised carrier film 10, on which a metallic layer 11 is coated, into a recess 12 in a core layer 13. The carrier film 10 may be clear (and may be possibly back-printed) or white and be made from PVC.

The carrier film 10 may be inserted as a strip or be cut from a reel and could be adhesive coated or adhesive could be applied to the film or to the recess 12.

A cover layer and a back layer (not shown) can be bonded onto the core layer 13 in a similar manner as in the previous example using for example RF bonding and in the case of the cover layer this can be bonded to the core layer 13 throughout an area 14 bounding the recess 12. The metal layer 11 is then imaged using a YAG laser, as before, and finally consolidated with the cover layer by RF bonding.

This technique is useful since it is not necessary to remove large areas of the metallic layer to reveal information printed on the core layer 13 and is particularly applicable where the bearer's signature only is to be imaged.

Additional security features may be included in the card and in particular these may include opaque devices such as phosphorescent, fluorescent and other optical devices, metallised grids, gratings, and pattern areas, and holograms. In the case of opaque devices, these may be incorporated into the card using a method similar to that shown in Figures 2A-2C. In this case, the carrier film 10 has a device printed on it towards one end of the film in an area 15 (Figure 2C.) The metallic layer 11 is then coated over the carrier film 10 and during the subsequent imaging step parts of the previously constructed opaque device will become visible in the area 15 where the metallic layer has been removed.

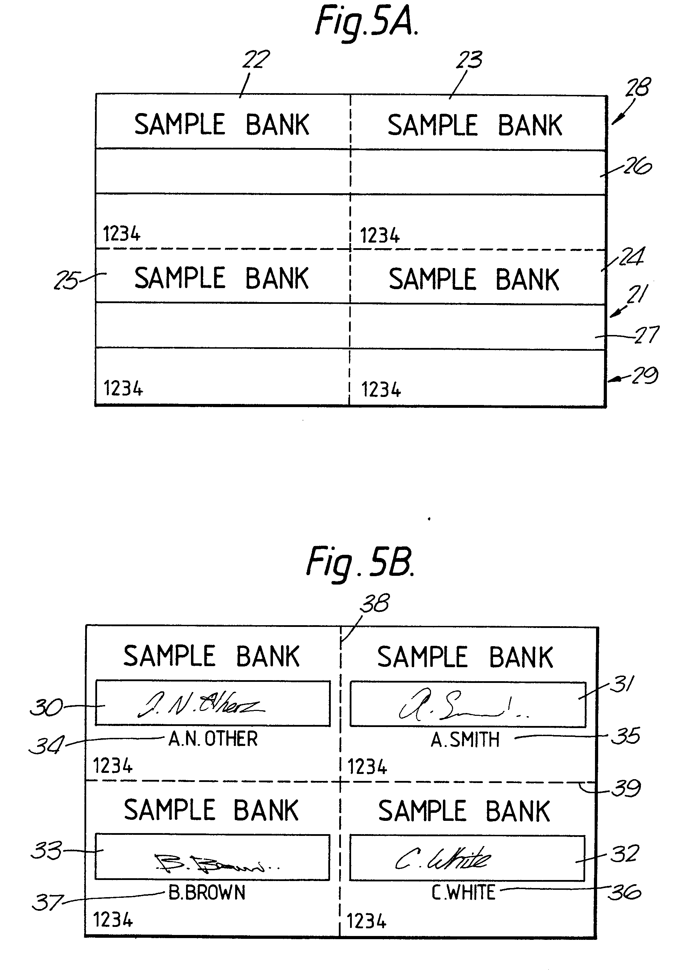

In other examples, transparent devices such as holograms, diffraction gratings, grids and the like can be incorporated into the card. Methods similar to that illustrated with reference to Figures 1A-1C are appropriate in this case. For example, the cover layer 4 may have an optical device embossed on its internal surface 16 (Figure 4) corresponding to a hologram or a grid pattern or grating. The metallic layer 5 is then coated over the surface 13 including the embossed portion and then during the subsequent imaging step the metallic layer 5 is left unchanged in areas coinciding with the embossed portion so that light passing through the cover layer 4 will be reflected back through the optical device.

In all these cases, where additional security features are provided, the imaging radiation can be used to inscribe codes, names, initials or other graphics in the metallic layer, as appropriate.

The methods described are particularly applicable to bulk manufacture of security cards. In one example (Figure 3), preformed cores 17 carrying printed information similar to the information shown in Figure 1A are inserted into a strip 20 of preformed pouches 18 made with metallised PVC film. The pouches 18 with the preformed cores 17 inserted are then sealed around their perimeters 19 using RF bonding and then imaged (on both sides in this case) and finally secured as in the previous methods described. A finished card can then be cut from the strip as desired. This method allows for a belt feed system in which for example sprocket holes could be cut in the strip.

Another method for manufacturing security card blanks and subsequently security cards in bulk form will now be described with reference to Figures 5A and 5B. In this case, a large area, composite assembly is produced having a series of layers similar to the assembly of Figure 1A. In this case, however, the area of the assembly 21 is sufficient to enable four security cards, each having a size similar to that of Figure 1C, to be produced. Initially, a core layer similar to the core layer 1 is printed in four similarly shaped, rectangular areas 22-25 with the same information. A metallised cover sheet is then laid over the printed core layer. In this example, the metallisation is in the form of a pair of substantially parallel metallic strips 26, 27 coated by vacuum deposition or the like to the undersurface of the cover sheet. As in the previous examples, another back cover sheet is assembled on the other side of the core layer. The metallised cover sheet is then loosely assembled with the core layer by RF welding along long edge sections or securement regions 28,29 to produce a composite blank as shown in Figure 5A.

The composite blank will then typically be sold to a card issuing institution who will then, using an imaging laser as described above, image the metallic strip in each of the regions 22-25 with image information unique to the future bearer of each card. For example, this unique information may comprise the signature of the bearer as indicated at 30-33 in Figure 5B. In addition, the portions of the metal strips adjacent the edges of each security card are removed by the laser.

The layers of the imaged blank are then fully consolidated together using RF welding, lamination, or hot melt adhesives and this is assisted by the removal of the areas of the metal strips adjacent the card boundaries so that the card can be be fully bonded around its entire perimeter.

Each section 22-25 of the composite card is embossed with the name of the bearer as indicated at 34-37 and then the finally completed composite card is cut into individual cards along the dashed lines 38-39.

It will be appreciated that the example shown in Figures 5A and 5B is a very simple version of a technique which can be used to generate many cards from a simple composite card blank.

In an alternative arrangement, the composite card blank shown in Figure 5A may be divided into individual card blanks prior to imaging the metallic strips.

0232579

## CLAIMS

1. A method of manufacturing a security card blank (7), the method comprising

a) assembling together a plurality of layers (1-5), an internal layer (5) comprising a metallic layer as hereinbefore defined; and

b) securing the layers (1-5) together such that the metallic layer (5) is secured by a controlled amount to the adjacent layers (1,4) to allow the metallic layer to be imaged by a high intensity radiation beam.

2. A method of manufacturing a plurality of security card blanks, the method comprising

a) assembling together a plurality of layers, an internal layer comprising a metallic layer as hereinbefore defined; and

b) securing the layers together to produce a composite blank (21), wherein the metallic layer is secured by a controlled amount to the adjacent layers to allow the metallic layer to be imaged by a high intensity radiation beam and dividing the composite blank into individual security card blanks (22-25).

3. A method according to claim 2, wherein the metallic layer comprises a number of substantially parallel metallic strips (26,27).

4. A method according to any of the preceding claims wherein the degree of securement in step (b) is sufficient to enable the card blank (7,21) to be handled.

5. A method according to any of the preceding claims, wherein at least part of the periphery of the metallic layer (5) is spaced inwardly from the edge of the card blank (7) to define one or more securement regions (6), the layers sandwiching the metallic layer being secured together in step (b) at the securement regions.

6. A method according to any of the preceding claims, wherein the non-metallic layers (1-4) comprise plastics materials.

7. A method according to claim 6, wherein step (b) comprises bonding the non-metallic layers together.

8. A method of manufacturing a security card (9) from a blank (7) manufactured according to any of the preceding claims, the method comprising

c) exposing the metallic layer (5) in the security card blank to radiation whereby the metallic layer is modified to produce an image (8) in the metallic layer, the arrangement being such that in the finished card at least part of the imaged metallic layer is detectable from outside the card.

9. A method of manufacturing a plurality of security cards, the method comprising

a) assembling together a plurality of layers, an internal layer comprising a metallic layer (26,27) as hereinbefore defined;

b) securing the layers together to produce a composite blank (21), wherein the metallic layer is secured by a controlled amount to the adjacent layers to allow the metallic layer to be imaged by a high intensity radiation beam;

c) exposing the metallic layer to radiation whereby the metallic layer is modified to produce images in the metallic layer, the arrangement being such that in the finished cards at least part of the imaged metallic layer is detectable from outside the cards, the metallic layer carrying different images (30-33) at spaced positions throughout the metallic layer; and dividing the imaged, composite blank into individual security cards.

0232579

10. A method according to claim 8 or claim 9, further comprising a step (d) of carrying out a final securing step to secure the layers fully together.

11. A method according to claim 10, when dependent on claim 9, wherein step (d) is carried out prior to the dividing step.

12. A method according to any of claims 8 to 11, wherein the image (30-33) carried by the metallic layer of each security card is characteristic of the bearer of the card.

13. A method according to any of claims 8 to 12, wherein step (c) comprises exposing the metallic layer to a controlled laser beam.

14. A method according to any of the preceding claims, wherein the metal layer is coated on another of the layers.

**Fig .1.**

A.

B.

C.

R.F.

Laser image

SAMPLE BANK

SAMPLE BANK

A. N. Other

**Fig .4.**

**Fig.2A.**

SAMPLE BANK

12

13

14

**Fig.2B.**

11

10    12    13

**Fig.2C.**

JAS
1234

15            10

**Fig.3.**

17

18

20

19

RF Sealed

## Fig.5A.

| 22 | 23 | 28 |
|---|---|---|
| SAMPLE BANK | SAMPLE BANK | |
| | | 26 |
| 1234 | 1234 | 24 |
| SAMPLE BANK | SAMPLE BANK | 21 |
| | | 27 |
| 1234 | 1234 | 29 |

25

## Fig.5B.

38

| SAMPLE BANK | SAMPLE BANK |
|---|---|
| *J. N. Other* | *A. S...* |
| A.N. OTHER | A.SMITH |
| 1234 | 1234 |
| SAMPLE BANK | SAMPLE BANK |
| *B. Bn...* | *C. White* |
| B.BROWN | C.WHITE |
| 1234 | 1234 |

30
34
33
37
31
35
32
36
39

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 264 712 (PICTORIAL PRODUCTIONS)  * Whole document * | 1,2,6-9,12,13 | G 06 K 19/08 G 06 K 1/12 |
| A | | 11 | |
| Y | WO-A-8 202 969 (DREXLER TECHNOLOGY)  * Figures 1-4; page 3, line 9 - page 6, line 9 * | 1,2,6-9,12,13 | |
| A | | 3,14 | |
| Y,D | DE-A-3 030 260 (HENGSTLER)  * Figures 1-3; page 6, line 2 - page 7, line 4 * | 1,2,6-9,12,13 | TECHNICAL FIELDS SEARCHED (Int. Cl.4)  G 06 K |
| A | | 3,5,10,14 | |
| A | US-A-3 560 994 (BOSCH)  * Whole document * | 1,2,8,9,13,14 | |

The present search report has been drawn up for all claims

| Place of search | Date of completion of the search | Examiner |
|---|---|---|
| THE HAGUE | 02-12-1986 | FORLEN G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82